# EUROPÄISCHE PATENTSCHRIFT

(11) **EP 4 466 172 B1**
(45) Veröffentlichungstag und Bekanntmachung des Hinweises auf die Patenterteilung: **17.12.2025**
(21) Anmeldenummer: 23718724.0
(22) Anmeldetag: 31.03.2023
(51) Int. Cl.: B61D 27/00

(54) **FAHRZEUG ZUR PERSONENBEFÖRDERUNG MIT DRUCKSCHUTZEINRICHTUNG**
VEHICLE FOR PASSENGER TRANSPORT WITH A PRESSURE PROTECTION DEVICE
VÉHICULE POUR LE TRANSPORT DE PASSAGERS AVEC UN DISPOSITIF DE PROTECTION CONTRE LA PRESSION

(30) Priorität: 08.04.2022 DE 102022203545
(43) Veröffentlichungstag der Anmeldung: 27.11.2024
(73) Patentinhaber: Siemens Mobility GmbH, 80997 München (DE)
(72) Erfinder: RODRIGUEZ AHLERT, Carlos-Jose, 52538 Gangelt (DE); RÜTER, Arnd, 47802 Krefeld (DE)
(74) Vertreter: Siemens Patent Attorneys
(86) Internationale Anmeldenummer: PCT/EP2023/058511
(87) Internationale Veröffentlichungsnummer: WO 2023/194246

(56) Entgegenhaltungen:
- EP-A1- 0 579 536
- EP-A1- 0 620 392
- EP-A2- 1 298 425
- CN-A- 105 539 476
- CN-A- 106 564 513
- CN-A- 110 723 158
- DE-A1- 10 233 517
- DE-A1- 19 548 108
- US-A1- 2017 232 978
- US-A1- 2020 156 668

## Beschreibung

Die Erfindung bezieht sich auf ein Fahrzeug zur Personenbeförderung nach dem Oberbegriff von Anspruch **1.**

Danach ist ein Fahrzeug zur Personenbeförderung bekannt, mit wenigstens einer Luftöffnung, die eine Umgebung des Fahrzeugs, die einen Außendruck aufweist, mit einem zur Aufnahme von Personen vorgesehenen Innenraum des Fahrzeugs, der einen Innendruck aufweist, verbindet, wenigstens einer Druckschutzklappe zum Öffnen oder Verschließen der Luftöffnung und einer Druckschutzeinrichtung zum Steuern der wenigstens einen Druckschutzklappe, wobei die Druckschutzeinrichtung eine Messvorrichtung zum Erfassen einer Druckdifferenz zwischen dem an einem Außendruck-Anschluss der Messvorrichtung anliegenden Außendruck und dem an einem Innendruck-Anschluss der Messvorrichtung anliegenden Innendruck sowie eine Druckauswerteeinrichtung zur Überwachung der von der Messvorrichtung gelieferten Druckdifferenzwerte aufweist, wobei die Druckauswerteeinrichtung derart ausgebildet ist, dass sie, wenn die Druckdifferenz einen vorgegebenen Schließen-Schwellwert erreicht, ein Schließen und, wenn die Druckdifferenz einen vorgegebenen Öffnen-Schwellwert erreicht, ein Öffnen der wenigstens einen Druckschutzklappe auslöst.

Aus der DE 102 33 517 A1 ist ein Belüftungssystem mit Druckschutzsystem für einen Innenraum eines Fahrzeuges bekannt, bei dem der Luftaustausch mit dem Außenraum auch bei Auftreten von Druckstößen oder Druckwellen an der Außenhaut des Fahrzeuges realisiert werden kann.

Fahrzeuge, die hohen Druckschwankungen ausgesetzt sind, wie beispielsweise in Tunnel einfahrende Schienenfahrzeuge, sind häufig mit einer Druckschutzeinrichtung ausgestattet, um den Druckkomfort im für Fahrgäste vorgesehenen Innenraum des Fahrzeugs zu verbessern. Eine solche Druckschutzeinrichtung arbeitet typischer Weise passiv und umfasst eine Druckauswerteeinheit sowie verschiedene Druckschutzklappen beispielsweise an vorgesehenen Frischluft- und/oder Fortluftöffnungen des Schienenfahrzeugs.

Die Druckschutzeinrichtung detektiert kritische Druckereignisse, wie beispielsweise das Einfahren eines Schienenfahrzeugs mit hoher Geschwindigkeit in einen (engen) Tunnel, und löst durch ein geeignetes Signal ein Schließen der Druckschutzklappen und damit der zugeordneten Luftöffnungen aus. Dadurch wird verhindert, dass aufgrund des vorübergehend in der Umgebung des Fahrzeugs herrschenden hohen Außendrucks durch die Luftöffnungen, welche die Umgebung des Fahrzeugs mit dem Innenraum des Fahrzeugs verbinden, stoßweise Luft in den Innenraum gedrückt wird.

Sobald das kritische Druckereignis nicht mehr vorliegt, beispielsweise nach Verlassen eines Tunnels, müssen die Druckschutzklappen jedoch wieder geöffnet werden, um insbesondere eine zulässige CO2-Konzentration im Innenraum des Fahrzeugs nicht zu überschreiten. Das Öffnen der Druckschutzklappen wird ebenfalls mit Hilfe der Druckschutzeinrichtung bewerkstelligt, und zwar durch geeignete Überwachung der von der Messvorrichtung für die Druckdifferenz gelieferten Druckdifferenzwerte. Ein in der Druckauswerteeinheit hinterlegter Regelalgorithmus wertet die gemessenen Druckdifferenzwerte aus und bewirkt nach Vorliegen der für ein Öffnen der Druckschutzklappen notwendigen Randbedingungen das Öffnen der Druckschutzklappen und damit der diesen zugeordneten Luftöffnungen.

Bei der bekannten Druckschutzeinrichtung besteht das Problem, im geöffneten Zustand der Druckschutzklappen eine ausreichende Druckdifferenz zwischen Außen- und Innendruck zu messen, um eine Detektion eines kritischen Druckereignisses auszulösen, ohne dabei die Detektion des Wiederöffnens der Druckschutzklappen negativ zu beeinflussen. Dies führt dazu, dass die Druckschutzeinrichtung entweder gar nicht, zu spät oder zu oft (z.B. auch bei Begegnungen von Schienenfahrzeugen auf offener Strecke) auslöst. Wird die Druckschutzeinrichtung dahingehend optimiert, dass die Detektion des Schließens der Druckschutzklappen gut funktioniert, entstehen oftmals Probleme beim Wiederöffnen der Druckschutzklappen, so dass es häufig zu einer zwanghaften Öffnung der Druckschutzklappen für Frischluftöffnungen wegen zu hoher CO2-Konzentration im Innenraum des Fahrzeugs führt. Dies verschlechtert dann den Druckkomfort im Innenraum des Fahrzeugs erheblich.

Das Dokument CN 105 539 476 A betrifft ein gattungsgemäßes Fahrzeug.

Ausgehend hiervon liegt der Erfindung die Aufgabe zugrunde, das Fahrzeug der eingangs genannten Art derart weiterzuentwickeln, dass kritische Druckereignisse besser abgebildet werden können, so dass es zu einer deutlichen Reduktion von Fehlauslösungen für das Schließen der Druckschutzklappen kommt, ohne dass dabei das Wiederöffnen der Druckschutzklappen erheblich negativ beeinflusst wird.

Diese Aufgabe wird bei dem eingangs beschriebenen Fahrzeug gelöst durch die kennzeichnenden Merkmale des Anspruchs **1.**

Danach ist erfindungsgemäß vorgesehen, dass die Druckschutzeinrichtung derart ausgebildet ist, dass in dem Fall, wenn die wenigstens eine Druckschutzklappe geöffnet ist, an der Messvorrichtung die Druckdifferenz aus dem Außendruck und einem von einer Referenzvorrichtung bereit gestellten Referenz-Innendruck gebildet wird. Dabei bildet die Referenzvorrichtung das Innendruckverhalten des Fahrzeugs bei geschlossener Druckschutzklappe nach.

Im Ergebnis wird somit bei geöffneter Druckschutzklappe die Druckdifferenz nicht aus dem Außendruck und dem realen Innendruck im Innenraum des Fahrzeugs gebildet. Vielmehr ergibt sich die Druckdifferenz aus dem Außendruck und einem von einer Referenzvorrichtung bereitgestellten Referenz-Innendruck.

Dabei bildet die Referenzvorrichtung das Innendruckverhalten des Fahrzeugs bei geschlossenen Druckschutzklappen nach. Dies verschafft den Vorteil, dass an der Messvorrichtung im Vergleich zum Stand der Technik viel höhere Druckdifferenzen im noch geöffneten Zustand der Druckschutzklappe gemessen werden können. Dies wiederum hat zur Folge, dass sich der Regelagorithmus der Druckauswerteeinrichtung besser justieren lässt und Fehldetektionen von kritischen Druckereignissen weitgehend vermieden werden können. Zudem lässt sich im Vergleich zum Stand der Technik der Druckkomfort im Fahrzeuginnenraum erheblich verbessern, und zwar bei gleichzeitig hoher Luftqualität (niedrige CO2-Konzentrationen).

Bevorzugt kann die Referenzvorrichtung zur Nachbildung des Innendrucks einen äußeren Luftanschluss, der mit der Umgebung des Fahrzeugs in Verbindung steht, einen Luftbehälter zur Nachbildung des Innenraums des Fahrzeugs und ein Drosselventil zur Nachbildung einer Leckage des Innenraums umfassen, wobei eine Seite des Luftbehälters über das Drosselventil mit dem äußeren Anschluss und die andere Seite des Luftbehälters mit dem Innendruck-Anschluss der Messvorrichtung strömungstechnisch verbunden ist. Ein wesentlicher Aspekt für die Nachbildung der Druckverhältnisse im Innenraum des Fahrzeugs ist dabei die Nachbildung der Leckage des Innenraums. Das dazu eingesetzte Drosselventil kann bevorzugt einstellbar sein, um die Leckage des Innenraums möglichst realistisch abzubilden.

Bevorzugt ist das Drosselventil als in seiner effektiven Länge und/oder seinem effektiven Durchmesser einstellbare Kapillare ausgebildet. Ein Verändern der effektiven Länge der Kapillare und damit Vergrößern ihres Strömungswiderstands kann somit verschiedene Leckage-Werte für den Innenraum des Fahrzeugs abbilden.

Zur Vermeidung von Verschmutzungen aus der Umgebung des Fahrzeugs kann zwischen dem Drosselventil und dem äußeren Luftanschluss ein Filter vorgesehen sein.

Bevorzugt ist die Kapillare sowohl in ihrem Innendurchmesser als auch in ihrer Länge einstellbar, um eine gewünschte Dichtigkeit zu erreichen bzw. eine realistische Leckage des Innenraums des Fahrzeugs nachzubilden. Vorzugsweise ist ein Innendurchmesser von 0,13 - 0,75 mm bei einer Gesamtlänge von 2 - 30 cm zu wählen.

Der Einsatz einer Kapillaren für das Drosselventil hat den Vorteil, dass eine definierte Leckage-Fläche sehr klein gewählt werden kann, um typische sog. "Tau-Werte" (Druckdichtigkeit) von im Wesentlichen druckdichten Schienenfahrzeugen zu erreichen. Dabei ist zu beachten, dass die Größe der Leckage-Fläche abhängig ist von der Größe des Luftbehälters. Dieser ist in seiner Größe durch die eher beengten Platzverhältnisse beispielsweise in einem Schienenfahrzeug begrenzt.

Zur Umsetzung der Funktion des Wiederöffnens der wenigstens einen Druckschutzklappe wird bevorzugt nicht auf die Referenzvorrichtung zurückgegriffen, die bei geöffneter Druckschutzklappe zum Einsatz kommt, um einen nachgebildeten Wert für den Innendruck des Fahrzeugs bereitzustellen. Würde auch bei geschlossener Druckschutzklappe auf die Referenzvorrichtung abgestellt, hätte man das Problem, dass ein Ausgleich des Innendrucks bei geschlossener Druckschutzklappe nicht mehr stattfinden könnte. Dadurch wird eine zutreffende Detektion für das Wiederöffnen der Druckschutzklappe verhindert.

Daher ist es bevorzugt, dass der Innendruck-Anschluss der Messvorrichtung über ein schaltbares Magnetventil mit dem Innenraum des Fahrzeugs verbunden ist und die Druckauswerteeinrichtung derart ausgebildet ist, dass sie, wenn die wenigstens eine Druckschutzklappe geschlossen ist, das Magnetventil öffnet, so dass an der Messvorrichtung die Druckdifferenz aus dem Außendruck und dem tatsächlichen Innendruck im Innenraum des Fahrzeugs gebildet wird.

Zur Verbesserung der akustischen Eigenschaften der Druckschutzvorrichtung ist es von Vorteil, wenn zwischen dem Magnetventil und dem Innenraum des Fahrzeugs ein Schalldämpfer angeordnet ist.

Mit dem Begriff "Luftöffnung" im Sinne dieser Beschreibung ist jegliche Öffnung gemeint, welche eine Umgebung des Fahrzeugs mit einem Innenraum des Fahrzeugs strömungstechnisch verbindet. Insofern kann es sich bei der Luftöffnung beispielsweise um eine Frischluftöffnung handeln, über die Frischluft für eine Klimaanlage eines Fahrzeugs angesaugt wird. Gleichermaßen ist es möglich, dass es sich bei der Luftöffnung um eine Fortluftöffnung handelt, über die Fortluft aus dem Innenraum des Fahrzeugs an die Umgebung des Fahrzeugs abgeführt wird.

Bevorzugt sind bei dem Fahrzeug mehrere, jeweils verschiedenen Luftöffnungen des Fahrzeugs zugeordnete Druckschutzklappen vorgesehen, die gemeinsam über eine Steuerleitung von der Druckschutzeinrichtung gesteuert sind. Beispielsweise kann bei dem Fahrzeug für die rechte und für die linke Fahrzeugseite jeweils eine Außendruckmessung vorgenommen werden, wobei jede Fahrzeugseite mit einer Druckschutzeinrichtung der oben beschriebenen Art ausgestattet ist.

Demgegenüber ist es auch möglich, dass jeder Luftöffnung eine einzelne Druckschutzeinrichtung zugeordnet ist.

Die Druckschutzeinrichtung lässt sich unabhängig von im Markt verfügbaren Frisch- und Fortluftanlagen und deren Regelalgorithmen verwenden und kann somit grundsätzlich über verschiedene Fahrzeugprojekte hinweg verwendet werden, bei denen ein Druckschutzsystem benötigt wird. Insbesondere die Referenzeinrichtung zur Nachbildung des Innenraumdrucks besteht aus nur wenigen Komponenten und kann leicht gewartet werden. Die Montage und Demontage gestaltet sich einfach. Es wird eine effiziente Steigerung des Druckkomforts bei gleichzeitig geringen Kosten ermöglicht.

Der Außendruck-Anschluss der Messvorrichtung auf der einen Fahrzeugseite kann bevorzugt über eine Verbindungsleitung mit einem Außendruck-Anschluss einer Messvorrichtung auf der anderen Fahrzeugseite strömungstechnisch verbunden sein.

Ein Ausführungsbeispiel der Erfindung wird nachfolgend unter Bezugnahme auf die Zeichnungen noch näher erläutert, wobei funktionsgleiche Komponenten mit denselben Bezugszeichen bezeichnet sind. Es zeigen:
- Figur 1: ein schematisches Schaltbild einer Druckschutzeinrichtung für ein Fahrzeug und
- Figur 2: eine schematische Seitenansicht der Druckschutzeinrichtung von Figur 1.

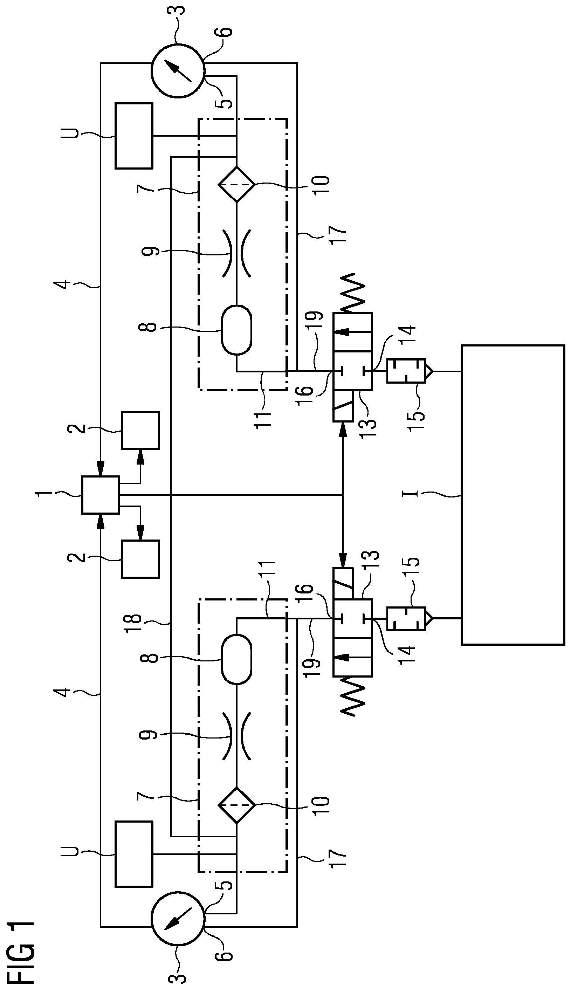

Figur 1 veranschaulicht eine Druckschutzeinrichtung, wobei eine rechte Seite der Figur 1 einer rechten Seite und eine linke Seite der Figur 1 einer linken Seite eines Fahrzeugs zur Personenbeförderung zugeordnet ist. Bei dem Fahrzeug kann es sich insbesondere um ein Schienenfahrzeug, beispielsweise einen Hochgeschwindigkeitszug, handeln. Zentrales Element der Druckschutzeinrichtung ist eine der beiden Fahrzeugsseiten gemeinsame Druckauswerteeinrichtung 1, welche die Aufgabe hat, kritische Druckereignisse zu erfassen, wie sie beispielsweise beim Einfahren eines Hochgeschwindigkeitszuges in einen Tunnel insofern auftreten, dass der Außendruck des Fahrzeugs sprunghaft zunimmt. Zur Vermeidung von Druckschlägen in einen Innenraum I des Fahrzeugs, der zur Unterbringung von Fahrgästen vorgesehen ist, steuert die Druckauswerteeinrichtung 1 Druckschutzklappen 2 an. Die Druckschutzklappen 2 sind jeweils Luftöffnungen des Fahrzeugs zugeordnet, die einen Luftaustausch zwischen der Umgebung des Fahrzeugs U und dem Fahrzeuginnenraum I ermöglichen. Beispielsweise handelt es sich bei den Luftöffnungen um Frischluftöffnungen, über die typischerweise Frischluft für eine vorgesehene Klimaanlage des Fahrzeugs angesaugt werden kann, oder Fortluftöffnungen, über die aus dem Innenraum I stammende Luft aus dem Fahrzeug abgeführt werden kann. Diese sämtlichen Luftöffnungen sind bei Auftreten eines kritischen Druckereignisses zu verschließen.

Zum Erfassen eines kritischen Druckereignisses steht die Druckauswerteeinrichtung 1 in Verbindung mit im vorliegenden Ausführungsbeispiel zwei Messvorrichtungen 3, die als Druckdifferenzsensoren ausgeführt sein können und über Signalleitungen 4 aktuell gemessene Druckdifferenzwerte an die von beiden Fahrzeugseiten gemeinsam genutzte Druckauswerteeinrichtung 1 übermitteln.

Auf freier Strecke sind die Druckschutzklappen 2 geöffnet, so dass eine bei dem Fahrzeug vorgesehene Klimaanordnung, die die Klimaanlage, diverse Klimakanäle, Zu- und Fortlüfter umfasst, im Normalbetrieb arbeiten kann.

Auf freier Strecke mit vollständig geöffneten Druckschutzklappen 2 arbeitetet die Druckschutzeinrichtung wie folgt: Auf einer jeweiligen Seite des Fahrzeugs ist die Messeinrichtung 3 über einen Außendruckanschluss 5 mit der Umgebung U des Fahrzeugs verbunden. Zwischen einem Innendruckanschluss 6 der Messvorrichtung 3 und der Umgebung U des Fahrzeugs ist eine Referenzvorrichtung 7 angeordnet, die einen Luftbehälter 8, ein einstellbares Drosselventil 9 und ein Filter 10 umfasst. Dabei ist der den Innenraum I nachbildende Luftbehälter 8 auf seiner einen Seite über Leitungen 11 und 17 mit dem Innendruckanschluss 6 der Messvorrichtung 3 verbunden, während die andere Seite des Luftbehälters 8 über das Drosselventil 9 und den Filter 10 mit der Umgebung U verbunden ist. Dabei bildet das einstellbare Drosselventil 9 eine typische Leckage des Innenraums I nach, während der Filter 10 die Aufgabe hat, aus der Umgebung U des Fahrzeugs stammende Verunreinigungen von dem Drosselventil 9 fernzuhalten. Das Drosselventil 9 ist bevorzugt als in seiner Länge und/oder seinem Durchmesser einstellbare Kapillare ausgeführt, sodass sie sehr geringe Leckage-Werte, wie sie bei modernen Hochgeschwindigkeitszügen, die im wesentlichen druckdicht sind, abbilden kann. Im Ergebnis beruhen die von der Messvorrichtung 3 gelieferten Druckdifferenzwerte bei geöffneten Druckschutzklappen 2 auf dem in der Umgebung U des Fahrzeugs tatsächlich vorliegenden Außendruck und einem mit Hilfe der Referenzvorrichtung 7 unter der Randbedingung, dass die Druckschutzklappen 2 geschlossen sind, nachgebildeten Innendruck. Dies gestattet die Messung höherer Druckdifferenzen im (noch) geöffneten Zustand der Druckschutzklappen **2.**

Bei Einfahrt in einen Tunnel steigen die von der Messvorrichtung 3 gemessenen Druckdifferenzwerte sprunghaft an, so dass ein vorgegebener Schließen-Schwellwert für die Druckschutzklappen 2 erreicht wird. Dies erfasst die Druckauswerteeinrichtung 1 und löst ein Schließen der Druckschutzklappen 2 auf beiden Seiten des Fahrzeugs aus. Mit der in dieser Weise erfolgten Erfassung eines kritischen Druckereignisses ändert sich der in die Druckdifferenzmessung eingehende Wert für den Innendruck am Innendruck-Anschluss **6.** Über eine elektrische Steuerleitung 12 werden einer jeweiligen Fahrzeugseite zugeordnete Magnetventile 13 geöffnet. Diese Magnetventile 13 weisen einen dem Innenraum I zugeordneten Innenraumanschuss 14 auf, der über einen Schalldämpfer 15 mit dem Innenraum I in strömungstechnischer Verbindung steht. Ein dem Innenraum I abgewandter Anschluss 16 der Magnetventile 13 ist jeweils sowohl über Leitungen 19 und 11 direkt mit dem Luftbehälter 8 als auch, über Leitung 19 und 17, mit dem Innendruck-Anschluss 6 der Messvorrichtung 3 verbunden. Insofern liegt bei geöffnetem Magnetventil 13 der tatsächlich im Innenraum I vorliegende Druck an dem Innenraum-Anschluss 6 an, sodass der von der Messvorrichtung 3 gelieferte Druckdifferenzwert auf einem realen Außendruck in der Umgebung U des Fahrzeugs und einem realen Innendruck im Innenraum I des Fahrzeugs beruht.

Mit fortschreitendem Druckausgleich verringern sich die Werte für die Druckdifferenz, die von der Messvorrichtung 3 geliefert werden. Bei Erreichen eines vorgegebenen Öffnen-Schwellwerts für die Druckdifferenz löst die Druckauswerteeinrichtung 1 ein Öffnen der Druckschutzklappe 2 aus und schließt die Magnetventile 13 automatisch über die elektrische Steuerleitung 12.

In einer abgewandelten Ausführungsform der Erfindung kann der Außendruck-Anschluss 5 der Messvorrichtung 3 auf der einen Fahrzeugseite über eine in Figur 1 dargestellte Verbindungsleitung 18 mit dem Außendruck-Anschluss 5 der Messvorrichtung 3 auf der anderen Fahrzeugseite strömungstechnisch verbunden werden. Da dadurch einseitige Druckereignisse (wie z.B. eine Zugbegegnung auf offener Strecke) ausgeglichen werden und somit keine Fehlauslösungen der Druckauswerteeinrichtung 1 stattfinden, kann eine Messvorrichtung 3 eingespart bzw. als redundant vorgesehen werden.

Es ist hervorzuheben, dass, wie anhand von Figur 1 beschrieben, die Druckauswerteeinrichtung 1 zur Steuerung mehrerer Druckschutzklappen 2 ausgeführt sein kann. Es ist jedoch ebenso möglich, dass für jede einzelne Druckschutzklappe, unabhängig davon, welcher Art von Luftöffnung zwischen der Umgebung U und dem Innenraum I sie zugeordnet ist, eine gesonderte Druckauswerteeinrichtung 1 vorgesehen ist.

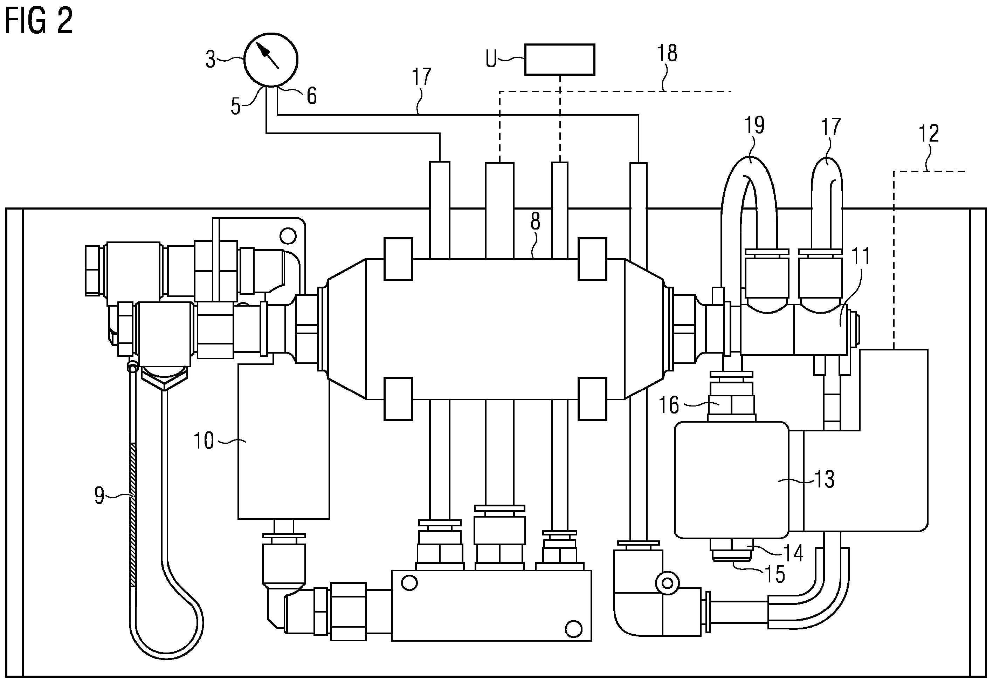

Figur 2 zeigt einen Teil der anhand von Figur 1 erläuterten Druckschutzeinrichtung in seiner räumlichen Ausgestaltung. In einer zentralen Position befindet sich der Luftbehälter 8, dessen eine Seite über das Drosselventil 9 und den Filter 10 mit der Umgebung U des Fahrzeugs verbunden ist. Die andere Seite des Luftbehälters 8 steht über die Leitung 11 in Verbindung mit dem Innendruck-Anschluss 6 der Messvorrichtung 3. Des Weiteren ist letztgenannte Seite des Luftbehälters 8 mit dem Magnetventil 13 strömungstechnisch verbunden, und zwar über die Leitung 19.

Hervorzuheben ist die Ausbildung des Drosselventils 9 als Kapillare. Innendurchmesser und Länge der Kapillare 9 werden in Abhängigkeit des Volumens des verwendeten Luftbehälters 8 so gewählt, dass die Leckagefläche pro Volumen dem Verhalten des tatsächlichen Volumens des Innenraums des Fahrzeugs I mit den charakteristischen Leckageflächen bei geschlossenen Druckschutzklappen 2 entspricht.

## Patentansprüche

1. Fahrzeug zur Personenbeförderung, mit
wenigstens einer Luftöffnung, die eine Umgebung (U) des Fahrzeugs, die einen Außendruck aufweist, mit einem zur Aufnahme von Personen vorgesehenen Innenraum (I) des Fahrzeugs, der einen Innendruck aufweist, verbindet,
wenigstens einer Druckschutzklappe (2) zum Öffnen oder Verschließen der Luftöffnung und
einer Druckschutzeinrichtung zum Steuern der wenigstens einen Druckschutzklappe (2), wobei die Druckschutzeinrichtung eine Messvorrichtung (3) zum Erfassen einer Druckdifferenz zwischen dem an einem Außendruck-Anschluss (5) der Messvorrichtung (3) anliegenden Außendruck und dem an einem Innendruck-Anschluss (6) der Messvorrichtung (3) anliegenden Innendruck sowie eine Druckauswerteeinrichtung (1) zur Überwachung der von der Messvorrichtung (3) gelieferten Druckdifferenzwerte aufweist, wobei die Druckauswerteeinrichtung (1) derart ausgebildet ist, dass sie, wenn die Druckdifferenz einen vorgegebenen Schließen-Schwellwert erreicht, ein Schließen und, wenn die Druckdifferenz einen vorgegebenen Öffnen-Schwellwert erreicht, ein Öffnen der wenigstens einen Druckschutzklappe (2) auslöst,
**dadurch gekennzeichnet, dass**
die Druckschutzeinrichtung derart ausgebildet ist, dass in dem Fall, wenn die wenigstens eine Druckschutzklappe (2) geöffnet ist, an der Messvorrichtung (3) die Druckdifferenz aus dem Außendruck und einem von einer Referenzvorrichtung (7), die ein Innendruckverhalten des Fahrzeugs bei geschlossener Druckschutzklappe (2) nachbildet, bereit gestellten Referenz-Innendruck gebildet wird.

2. Fahrzeug nach Anspruch 1,
**dadurch gekennzeichnet, dass**
die Referenzvorrichtung (7) zur Nachbildung des Innendrucks einen äußeren Luftanschluss, der mit der Umgebung (U) des Fahrzeugs in Verbindung steht, einen Luftbehälter (8) zur Nachbildung des Innenraums (I) und ein Drosselventil (9) zur Nachbildung einer Leckage des Innenraums (I) umfasst, wobei eine Seite des Luftbehälters (8) über das Drosselventil (9) mit dem äußeren Luftanschluss und die andere Seite des Luftbehälters (8) mit dem Innendruck-Anschluss (6) der Messvorrichtung (3) verbunden ist.

3. Fahrzeug nach Anspruch 2,
**dadurch gekennzeichnet, dass**
zwischen dem Drosselventil (9) und dem äußeren Luftanschluss ein Filter (10) angeordnet ist.

4. Fahrzeug nach einem der Ansprüche 2 bis 3,
**dadurch gekennzeichnet, dass**
das Drosselventil (9) als in seiner effektiven Länge und/oder seinem effektiven Innendurchmesser einstellbare Kapillare ausgebildet ist, wobei vorzugsweise ein Innendurchmesser von 0,13 - 0,75 mm bei einer Gesamtlänge von 2 - 30 cm zu wählen ist.

5. Fahrzeug nach einem der Ansprüche 1 bis 4,
**dadurch gekennzeichnet, dass**
der Innendruck-Anschluss (6) der Messvorrichtung (3) über ein schaltbares Magnetventil (13) mit dem Innenraum (I) des Fahrzeugs verbunden ist und die Druckauswerteeinrichtung (1) derart ausgebildet ist, dass sie, wenn die wenigstens eine Druckschutzklappe (2) geschlossen ist, das Magnetventil (13) öffnet, so dass an der Messvorrichtung (3) die Druckdifferenz aus dem Außendruck und dem tatsächlichen Innendruck im Innenraum (I) des Fahrzeugs gebildet wird.

6. Fahrzeug nach Anspruch 5,
**dadurch gekennzeichnet, dass**
zwischen dem Magnetventil (13) und dem Innenraum (I) des Fahrzeugs ein Schalldämpfer (15) angeordnet ist.

7. Fahrzeug nach einem der Ansprüche 1 bis 6,
**dadurch gekennzeichnet, dass**
die Luftöffnung als Frischluftöffnung oder Fortluftöffnung ausgebildet ist.

8. Fahrzeug nach einem der Ansprüche 1 bis 7,
**dadurch gekennzeichnet, dass**
mehrere, jeweils verschiedenen Luftöffnungen des Fahrzeugs zugeordnete Druckschutzklappen (2) vorgesehen sind, die gemeinsam über eine Steuerleitung (12) von der Druckschutzeinrichtung gesteuert sind.

9. Fahrzeug nach einem der Ansprüche 1 bis 8,
**dadurch gekennzeichnet, dass**
der Außendruck-Anschluss (5) der Messvorrichtung (3) auf der einen Fahrzeugseite über eine Verbindungsleitung (18) mit einem Außendruck-Anschluss (5) einer Messvorrichtung (3) auf der anderen Fahrzeugseite strömungstechnisch verbunden ist.

## Claims

1. Vehicle for passenger transport, having
at least one air opening which connects an environment (U) of the vehicle, which has an external pressure, to an interior (I) of the vehicle which has an internal pressure and is provided for accommodating passengers,
at least one pressure protection flap (2) for opening or closing the air opening, and
a pressure protection facility for controlling the at least one pressure protection flap (2), wherein the pressure protection facility has a measuring apparatus (3) for detecting a pressure differential between the external pressure prevailing at an external pressure connection (5) of the measuring apparatus (3) and the internal pressure prevailing at an internal pressure connection (6) of the measuring apparatus (3) and a pressure evaluation facility (1) for monitoring the pressure differential values supplied by the measuring apparatus (3), wherein the pressure evaluation facility (1) is designed such that, when the pressure differential reaches a predetermined closing threshold value, it triggers the closing of the at least one pressure protection flap (2) and, when the pressure differential reaches a predetermined opening threshold value, it triggers the opening of the at least one pressure protection flap (2), **characterised in that**
the pressure protection facility is designed in such a way that, when the at least one pressure protection flap (2) is open, the pressure differential is formed at the measuring apparatus (3) from the external pressure and a reference internal pressure that is already provided by a reference apparatus (7) which simulates the internal pressure behaviour of the vehicle when the pressure protection flap (2) is closed.

2. Vehicle according to claim 1,
**characterised in that**
the reference apparatus (7) comprises an external air connection, which is connected to the environment (U) of the vehicle, for simulating the internal pressure, an air reservoir (8) for simulating the interior (I) and a throttle valve (9) for simulating a leakage of the interior (I), wherein one side of the air reservoir (8) is connected via the throttle valve (9) to the external air connection and the other side of the air reservoir (8) is connected to the internal pressure connection (6) of the measuring apparatus (3).

3. Vehicle according to claim 2,
**characterised in that**
a filter (10) is arranged between the throttle valve (9) and the external air connection.

4. Vehicle according to one of claims 2 to 3,
**characterised in that**
the throttle valve (9) is designed as a capillary that is adjustable in its effective length and/or in its effective inner diameter, wherein preferably an inner diameter of 0.13 - 0.75 mm with a total length of 2 - 30 cm is to be selected.

5. Vehicle according to one of claims 1 to 4,
**characterised in that**
the inner pressure connection (6) of the measuring apparatus (3) is connected to the interior (I) of the vehicle via a switchable solenoid valve (13) and the pressure evaluation facility (1) is designed in such a way that it opens the solenoid valve (13) when the at least one pressure protection flap (2) is closed, so that the pressure differential is formed at the measuring apparatus (3) from the external pressure and the actual internal pressure in the interior (I) of the vehicle.

6. Vehicle according to claim 5,
**characterised in that**
a sound damper (15) is arranged between the solenoid valve (13) and the interior (I) of the vehicle.

7. Vehicle according to one of claims 1 to 6,
**characterised in that**
the air opening is designed as a fresh air opening or an exhaust air opening.

8. Vehicle according to one of claims 1 to 7,
**characterised in that**
multiple pressure protection flaps (2) which are each assigned to different air openings of the vehicle are provided and are jointly controlled by the pressure protection facility via a control line (12).

9. Vehicle according to one of claims 1 to 8,
**characterised in that**
the external pressure connection (5) of the measuring apparatus (3) on one vehicle side is connected in terms of flow via a connecting line (18) to an external pressure connection (5) of a measuring apparatus (3) on the other side of the vehicle.

## Revendications

1. Véhicule de transport de passagers, comprenant
au moins une ouverture d'aération, qui met un environnement (U) du véhicule, qui a une pression extérieure, en communication avec un espace (I) intérieur du véhicule, qui est prévu pour le logement de voyageurs et qui a une pression intérieure,
au moins un volet (2) de protection vis-à-vis de la pression pour l'ouverture ou la fermeture de l'ouverture d'aération et
un dispositif de protection vis-à-vis de la pression pour la commande du au moins un volet (2) de protection vis-à-vis de la pression, dans lequel le dispositif de protection vis-à-vis de la pression a un dispositif (3) de mesure pour la détection d'une différence de pression entre la pression extérieure s'appliquant à un raccord (5) de pression extérieure du dispositif (3) de mesure et la pression intérieure s'appliquant à un raccord (6) de pression intérieure du dispositif (3) de mesure ainsi qu'un dispositif (1) d'évaluation de la pression pour la surveillance des valeurs de différence de pression données par le dispositif (3) de mesure, dans lequel le dispositif (1) d'évaluation de la pression est conformé de manière à ce qu'il déclenche, lorsque la différence de la pression atteint une valeur de seuil de fermeture donnée à l'avance, une fermeture et, lorsque la différence de pression atteint une valeur de seuil d'ouverture donnée à l'avance, une ouverture du au moins un volet (2) de protection vis-à-vis de la pression,
**caractérisé en ce que**
le dispositif de protection vis-à-vis de la pression est constitué, de manière à ce que, dans le cas où le au moins un volet (2) de protection vis-à-vis de la pression est ouvert, il soit formé sur le dispositif (3) de mesure, la différence de pression entre la pression extérieure et une pression intérieure de référence déjà donnée par un dispositif (7) de référence, qui représente un comportement de la pression intérieure du véhicule, lorsque le volet (2) de protection vis-à-vis de la pression est fermé.

2. Véhicule suivant la revendication 1,
**caractérisé en ce que**
le dispositif (7) de référence a, pour la représentation d'une pression intérieure, un raccord extérieur pour de l'air, qui est en communication avec l'environnement (U) du véhicule, un réservoir (8) d'air pour la représentation de l'espace (I) intérieur et une soupape (9) d'étranglement pour la représentation d'une fuite de l'espace (I) intérieur, dans lequel un côté du réservoir (8) d'air communique, par la soupape (9) d'étranglement, avec le raccord extérieur pour de l'air et l'autre côté du réservoir (8) d'air avec le raccord (6) de pression intérieure du dispositif (3) de mesure.

3. Véhicule suivant la revendication 2,
**caractérisé en ce qu'**
un filtre (10) est monté entre la soupape (9) d'étranglement et le raccord extérieur pour de l'air.

4. Véhicule suivant l'une des revendications 2 à 3,
**caractérisé en ce que**
la soupape (9) d'étranglement est constituée sous la forme d'un capillaire réglable dans sa longueur effective et/ou son diamètre intérieur effectif, dans lequel, de préférence, il faut choisir un diamètre intérieur de 0,13 à 0,75 mm pour une longueur d'ensemble de 2 à 30 cm.

5. Véhicule suivant l'une des revendications 1 à 4,
**caractérisé en ce que**
le raccord (6) de pression intérieure du dispositif (3) de mesure communique avec l'espace (I) intérieur du véhicule par une électrovanne (13) pouvant être manœuvrée et le dispositif (1) d'évaluation de la pression est constitué, de manière, lorsque le au moins un volet (2) de protection vis-à-vis de la pression est fermé, à ouvrir l'électrovanne (13), de sorte qu'il est formé, sur le dispositif (3) de mesure, la différence de pression entre la pression extérieure et la pression intérieure réelle à l'intérieur (I) du véhicule.

6. Véhicule suivant la revendication 5,
**caractérisé en ce qu'**
un amortisseur (15) de bruit est monté entre l'électrovanne (13) et l'espace (I) intérieur du véhicule.

7. Véhicule suivant l'une des revendications 1 à 6,
**caractérisé en ce que** l'
ouverture d'aération est constituée sous la forme d'une ouverture pour de l'air frais ou pour une ouverture pour de l'air en circulation.

8. Véhicule suivant l'une des revendications 1 à 7,
**caractérisé en ce qu'**
il est prévu plusieurs volets (2) de protection vis-à-vis de la pression, affectés respectivement à diverses ouvertures d'aération du véhicule, qui sont commandées par le dispositif de protection vis-à-vis de la pression conjointement par une ligne (12) de commande.

9. Véhicule suivant l'une des revendications 1 à 8,
**caractérisé en ce que**
le raccord (5) de pression extérieure du dispositif (3) de mesure communique en technique d'écoulement d'un côté du véhicule par un conduit (18) de communication avec un autre raccord (5) de pression extérieure d'un dispositif (3) de mesure de l'autre côté du véhicule.
